# EUROPEAN PATENT APPLICATION

(11) **EP 4 737 371 A2**
(43) Date of publication of application: **06.05.2026**
(21) Application number: 25211985.4
(22) Date of filing: 29.10.2025
(51) Int. Cl.: B66B 1/34, G06F 8/656

(54) **METHOD AND SYSTEM FOR UPDATING PARAMETERS OF A DEVICE CONTROLLER UTILIZING ACCUMULATED DATA IN A CLOUD SYSTEM**

(30) Priority: 30.10.2024 US 202418931885
(71) Applicant: Otis Elevator Company, Farmington, Connecticut 06032 (US)
(72) Inventor: Brewer, Jeffrey, Florence, SC, 29501 (US); Pedersen, Karl, Farmington, 06032 (US); Raj, Ankit, 500081 Hyderabad (IN); Kuttagulla, Eliyaz, 500081 Hyderabad (IN); Bachhu, Seetaiah, 500081 Hyderabad (IN); Pusala, Rajinikanth, 500081 Hyderabad (IN); Holey, Gaurav, 500081 Hyderabad (IN)
(74) Representative: Schmitt-Nilson Schraud Waibel Wohlfrom Patentanwälte Partnerschaft mbB

(57) **Abstract**

A system configured for defining and implementing updated initial operational parameters of device controllers, the system having a controller that is configured to: monitor for updates to current operational parameters installed on the device controllers that are located over a distributed network, determine that common ones of the current operational parameters are updated to a common state a number of times above a threshold, and thereafter define the updated initial operating parameters, wherein the updated initial operating parameters include operational parameters in a state that matches the ones of the current operational parameters that were updated to the common state the number of times above the threshold, and thereafter initially program further device controllers to include the updated initial operating parameters.

## Description

The embodiments are directed to people mover systems and more specifically method and system for updating parameters of a device controller utilizing accumulated data in a cloud system.

People mover systems, such as elevator cars, escalators and movable walkways may be controlled by programmable controllers. Controllers shipped from a factory may have a default configuration. To control such systems as desired, the parameters of the default configuration may be set locally with a service tool (SVT tool) or set remotely utilizing a cloud-configuration tool. The configuration parameters may be finetuned and re-configured during a pilot phase installation of the controller (e.g., initial testing) and a pre-production phase installation (e.g., prior to the initial run of the people mover system). However, these modifications may not be reflected in the default factory configuration for future installations. As a result, the default factory configuration may need adjusting on every installation. This results in an increase in installation time and cost.

Disclosed is a system configured for updating operational parameters of a device controller located on a distributed network, comprising: a cloud system that is configured to receive, over a first network, current operational parameters installed on the device controller, wherein the cloud system is configured to analyze the current operational parameters, and based on a trigger, transmit predetermined operational parameters, stored on the cloud system, to the device controller to replace the current operational parameters; and the cloud system is configured to transmit an alert to a mobile device over a second network upon updating the current operational parameters to the predetermined operational parameters.

Particular embodiments further may include at least one, or a plurality of, the following optional features, alone or in combination with each other:
In addition to one or more aspects of the system, or as an alternate, the trigger includes the cloud system identifying that the current operational parameters: (i) are factory default operational parameters; or (ii) differ from the predetermined operational parameters.

In addition to one or more aspects of the system, or as an alternate, the system includes a plurality of the device controllers distributed over the distributed network; and the cloud system is configured to periodically scan for updates in the operational parameters installed on the device controllers to identify whether to update the predetermined operational parameters.

In addition to one or more aspects of the system, or as an alternate, devices controlled by the device controllers are one of elevator cars; escalators; or moving walkways.

In addition to one or more aspects of the system, or as an alternate, the devices are elevator cars; and the devices include device subsystems, which include one or more of internal lights; fans; breaks; occupancy sensors; or a car control panel.

In addition to one or more aspects of the system, or as an alternate, the cloud system is configured to update one of the operational parameters, stored on the cloud system, associated with a corresponding one of a plurality of device subsystems of the device, following determining by the cloud system that an updated version of the one of the operational parameters is utilized more frequently by the device controllers in the distributed network compared with a previous version of one of the operational parameters.

In addition to one or more aspects of the system, or as an alternate, upon updating the predetermined operational parameters stored on the cloud system, the cloud system is configured to update the operational parameters to the predetermined operational parameters for each of the device controllers on the distributed network having one or more predetermined common attributes.

In addition to one or more aspects of the system, or as an alternate, the one or more predetermined common attributes includes one or more of devices located in a same building, or within a same geographic region, or having one or more of the device subsystems that are the same as each other.

In addition to one or more aspects of the system, or as an alternate, the cloud system is configured to transmit, over the first network, to a building controller, the predetermined operational parameters stored on the cloud system, and the building controller is configured to transmit the predetermined operational parameters to the plurality of the controllers located in the same building over a third network.

Disclosed is a system configured for defining and implementing updated initial operational parameters of device controllers, the system including a controller that is configured to: monitor for updates to current operational parameters installed on the device controllers that are located over a distributed network, determine that common ones of the current operational parameters are updated to a common state a number of times above a threshold, and thereafter define the updated initial operating parameters, wherein the updated initial operating parameters include operational parameters in a state that matches the ones of the current operational parameters that were updated to the common state the number of times above the threshold, and thereafter initially program further device controllers to include the updated initial operating parameters.

Particular embodiments further may include at least one, or a plurality of, the above optional features, alone or in combination with each other:
Disclosed is a method for updating operational parameters of a device controller located on a distributed network, including receiving, by a cloud system, over first network, current operational parameters installed on the device controller; analyzing, by the cloud system, the current operational parameters, and based on a trigger, transmuting predetermined operational parameters, stored on the cloud system, to the device controller to replace the current operational parameters; and transmitting, by the cloud system over a second network, an update alert to a mobile phone upon updating the current operational parameters to the predetermined operational parameters.

Particular embodiments further may include at least one, or a plurality of, the following optional features, alone or in combination with each other:
In addition to one or more aspects of the method, or as an alternate, the method includes identifying, by the cloud system as the trigger, that the current operational parameters (i) are factory default operational parameters; or (ii) differ from the predetermined operational parameters.

In addition to one or more aspects of the method, or as an alternate, the cloud system includes a plurality of the device controllers distributed over the distributed network; and the method comprises periodically scanning, by the cloud system, for updates in the operational parameters installed on the device controllers to identify whether to update the predetermined operational parameters.

In addition to one or more aspects of the method, or as an alternate, devices controlled by the device controllers are one of elevator cars; escalators; or moving walkways.

In addition to one or more aspects of the method, or as an alternate, the devices are elevator cars; and the devices include device subsystems, which include one or more of internal lights; fans; breaks; occupancy sensors; or a car control panel.

In addition to one or more aspects of the method, or as an alternate, the method includes updating, by the cloud system, one of the operational parameters, stored on the cloud system, associated with a corresponding one of a plurality of device subsystems of the device, following determining by the cloud system that an updated version of the one of the operational parameters is utilized more frequently by the device controllers in the distributed network compared with a previous version of one of the operational parameters.

In addition to one or more aspects of the method, or as an alternate, upon updating the predetermined operational parameters stored on the cloud system, the method includes updating, by the cloud system, the operational parameters to the predetermined operational parameters for each of the device controllers on the distributed network having one or more predetermined common attributes.

In addition to one or more aspects of the method, or as an alternate, the one or more predetermined common attributes includes one or more of devices located in a same building, or within a same geographic region, or having one or more of the device subsystems that are the same as each other.

In addition to one or more aspects of the method, or as an alternate, the method includes transmitting by the cloud system, over the first network, to a building controller, the predetermined operational parameters stored on the cloud system, and the building controller transmits the predetermined operational parameters to the plurality of the controllers located in the same building over a third network.

In addition to one or more aspects of the method, or as an alternate, the first network is a wide area network, the second network is a cellular network, and the third network is a CAN network or a local area network.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows components of a distributed system according to the embodiments that is configured to update parameters of a car controller, e.g., utilizing accumulated data in a cloud system;
FIG. 3 schematically shows components utilized for updating parameters of a car controller utilizing accumulated data in a cloud system;
FIG. 4 is a process map showing an updating of parameters of a car controller utilizing accumulated data in a cloud system;
FIGS. 5 shows a flowchart of a method of updating of parameters of a car controller utilizing accumulated data in a cloud system; and
FIG. 6 is another flowchart showing a method for defining updated operating parameters, for an initial factory installation on a car controller.

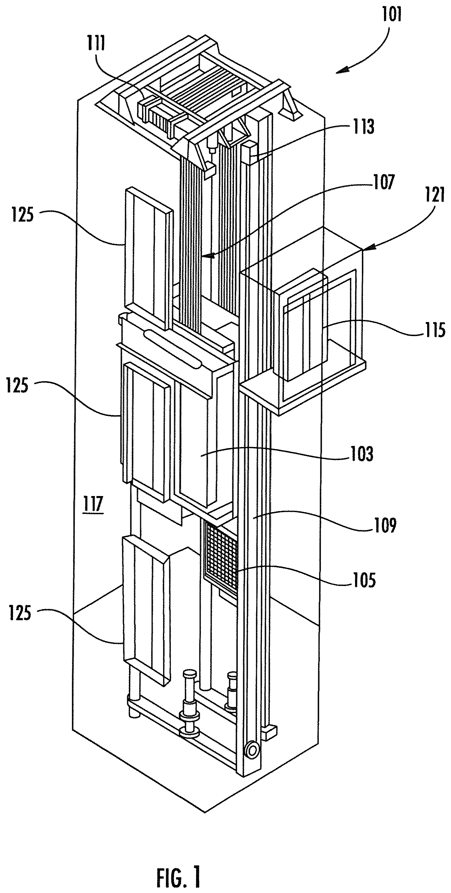

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator and/or moving walkway system and a conveyance apparatus of the conveyance system such as a moving stair of the escalator and/or moving walkway system.

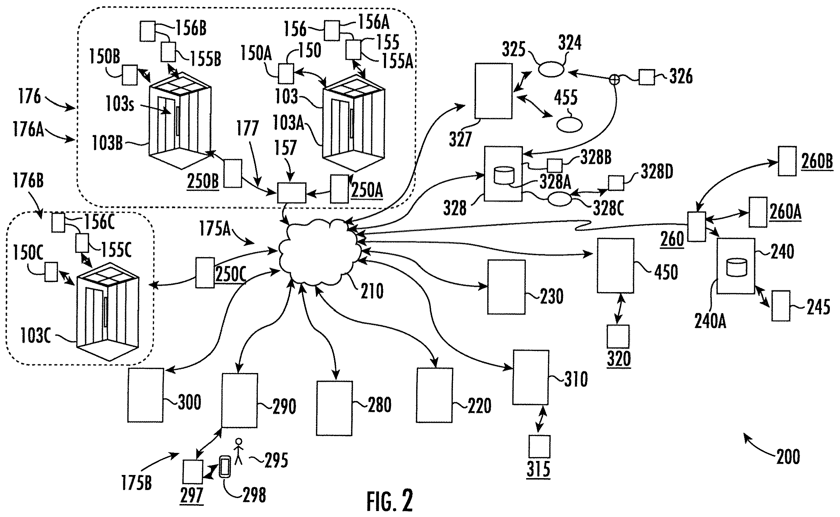

Turning to FIG. 2, disclosed is a distributed system, e.g., a cloud system 200 (or cloud service). While various modules are illustrated for performing discrete functions in FIG. 2, it is to be appreciated that two or more of the functions may be combined into a common module or alternatively the functions may be further divided into additional modules.

The cloud system 200 includes a network 210 which may be a wide area network such as the internet. Devices 103A-103C (generally 103), which may be elevator cars, escalators, moving walkways or the like, as nonlimiting embodiments, may be IoT (internet of things) devices, i.e., devices operationally coupled over the internet over a first communication channel 175A. The first communication channel 175 may utilize a wired channel, such as ethernet, or a wireless channel, e.g., a wide area network, a cellular network, a Wifi network, a Bluetooth network, a Zwave network, etc., discussed in greater detail below. Each of the devices 103 may have a device controller 150A-150C (generally 150) and a sensor 155A-155C (generally 155) configured to transmit sensor data 156A-156C (generally 156). Two of the devices 103A, 103B may be in a first building 176A (generally 176) and may transmit information to a common controller 157 over a CAN network, or other wired or wireless local network 177 and the common controller or building controller 157 may transmit the information out of the building over the first communication channel 175. The third device 103C may be in another (second) building 176B and communicate via its controller 150C over the first communications channel 175. The sensor 155 may include one or more of a speed sensor, a vibration sensor, a load sensor, a door operation sensor and a health sensor, e.g., that is configured to sense a mechanical failure of the device 103. Each of the cars 103 may have subsystems 103s, including for example, the doors, lights, breaks, control panel, etc.

The cloud system 200 may have a controller module (or service) 220, an IoT central module 230 or similar platform, and an IoT application and data storage module 240 (for simplicity an application module or an IoT app module 240). The IoT central module 230 is a known IoT application platform as a service (aPaaS) with user-engageable dashboards that centralizes device data, allows for data-driven workflows, and the creation of custom apps.

IoT app module 240 is utilized for storage and other processes running in a cloud system. The telemetry data (or telemetry messages) 250 that come from the devices 103 (e.g., in a raw format or as processed data, as nonlimiting examples) are extracted, transformed into a readable/storable format and loaded onto databases for the front end applications to consume and publish. The controller module 220 instructs the IoT central module 230 to register the devices 103 with the IoT app module 240 to enable the IoT app module 240 to receive telemetry data 250A-250C (generally 250), which include the sensor data 156, from the devices 103 and to transmit code 260, such as updates, e.g., stored in a database 240A, to the devices 103. The devices 103 may also interact in other ways with each other and the cloud, e.g., to request updates, voice communications, etc.

There may be hundreds of thousands of the devices 103, each sending production (e.g., actual) telemetry data 250 to the IoT app module 240, each message related to different aspects of the devices 103, such as the operational condition of the breaks, doors, etc., throughout the day.

The IoT app module 240 may generate logs 245, daily, indicative of received telemetry data 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via an interactive performance dashboard 297, accessible via a web interface module 290, e.g., on a mobile phone 298 as a nonlimiting embodiment. With this configuration, errors in the communications can be identified by a user 295 who may be a technician. The user may engage an API module (or gateway) 300 to engage the controller module 220. The mobile phone 298 may communicate over a second communication channel 175B which may be a cellular network or a wide area network.

More specifically, the figure shows the user 295 that engages the web interface module 290 to communicate with the controller module 220 via the API module 300 and to view the performance dashboard 297, e.g., on their mobile phone 298. The IoT central module 230 is shown that registers the devices 103 with the IoT app module 240. The registration establishes trust in device connectivity and allows messages to traverse between devices and the cloud in both directions, i.e., device to cloud and cloud to device, according to predefined load scenarios. The monitoring module 280 may monitor telemetry logs 245 generated by the IoT app module 240. The query module 450 may generate telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240.

According to the embodiments, a machine learning model (MLM) 325 (generally referred to as a neural network model or a generative AI model 324), may be within an AI module 327 or in one of the identified modules and utilized, e.g., for generating the data used in the reports 320. The MLM 325 may be engaged by the user 295, utilizing natural language, when requesting a report, e.g., seeking a solution to a technical operational issue related to operation of the devices 103. In response, the MLM 325 may provide recommendations on remedying issues identified in the telemetry logs 245, e.g., based on accumulated data utilized to train the MLM 325.

As can be appreciated, the MLM 325, may be in a learning mode (training mode), where it is training on datasets, such as obtained from the sensor data 156 or other data identified below. In this mode, the MLM 325 learns patterns and relationships within the data to make accurate predictions or decisions. In this mode, the parameters of the MLM 325 are adjusted based on the input data and the desired output. In a production mode (inference mode), once the MLM 325 is trained and validated, and is deployed, the MLM 325 uses the learned parameters to make predictions on new, unseen data, and provides real-time or batch predictions to end-users or other systems.

Similarly, according to the embodiments, the AI module 327, or e.g., the query module 450, may be equipped with a large language model (LLM) 455 as another generative AI model 324. The LLM 455 may be trained using typical techniques, e.g., collecting and processing datasets that are relevant to the operation of the devices 103, applying a model architecture such as transformers which can handle long-range dependencies in text, applying hyperparameter tuning to the training data batches to adjust the size and configuration of the training data, applying optimization technique to improve accuracy, and thereafter iteratively tuning the LLM 455. The LLM 455 may be trained to respond to technicians 295 who submit queries, e.g., to the controller module 220, for reports 320 about the current, historical, and predictable (e.g., statistically) future operational conditions of the cloud system 200. That is, while the MLM 325 may be utilized to identify technical operational issues in the cloud system 200 and recommend solutions, the LLM 455 may be utilized to enable a communication exchange with a technician 295 utilizing natural language.

It is to be appreciated that the MLM 325 may be trained to respond to natural language input without the need for a separate LLM 455, e.g., utilizing natural language processing (NLP). NPL is a subfield of machine learning focused on the interaction between computers and human language.

In accordance with additional aspects of the embodiments, an analytics module 328 may be provided which may collect and store received device data 326 instead of or in addition to the AI module 327. The analytics module 328 may have a database 328A that may contain the received device data 326 as lists 328B of the data 326. The analytics module 328 may include an analytics processor 328C that executes an analytics process 328D utilizing the device data 326, such as on one or more of the lists 328B. The process 328D may be, for example, a statistical analysis as a non-limiting embodiment. It is to be appreciated that the analytics module 328 may in some embodiments include the AI module 327. Output from the analytics module 328 may be utilized for the same purpose as the AI module 327, identified above.

As indicated, while various modules are illustrated for performing discrete functions in FIG. 2, it is to be appreciated that two or more of the functions may be combined into a common module or alternatively the functions may be further divided into additional modules. As such reference to the controller module 220 herein may implicate functions described as applicable to the controller module 220 or other modules.

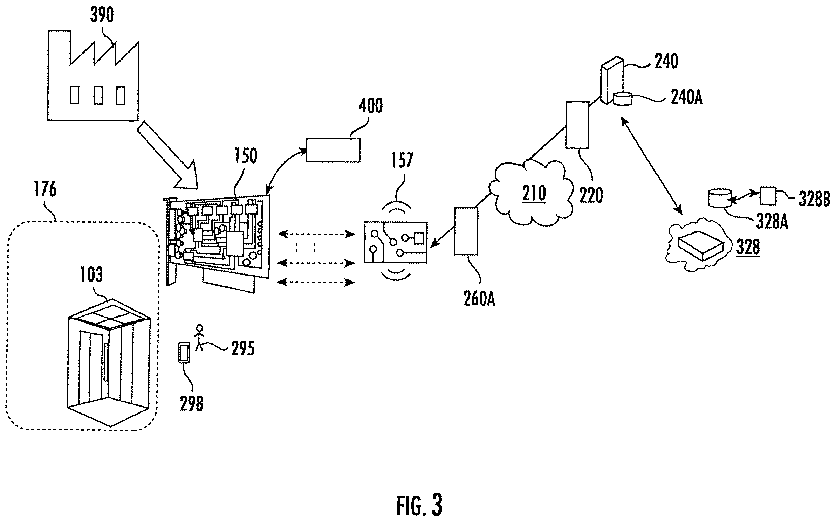

Turning to FIG. 3, the disclosure herein shall continue to focus on an elevator car 103 and controller 150 as a nonlimiting example, i.e., for simplicity only. The disclosure is equally applicable to other people mover systems such as escalators and movable walkways, and controllers for the same.

According to an embodiment, a car controller software configuration 400 for an elevator car controller 150 will be initially flashed at the factory 390 where it is assembled with referenced configuration parameters 400, under a predetermination that these settings will meet standard requirements for the elevator system 101. The default parameters 400 may include automated door opening and lighting controls, energy regeneration utilizing the breaks, elevator speed, etc. During installation, i.e., at the building 176, the car controller 150 may communicate with the controller module 220 via the building controller 157, e.g., over the network 210, for registering the car 103 of the system 101 as indicated above.

The parameters of the initial configuration 400 may be modified based on the analytics module 328 identifying from the parameter lists 328B those parameters commonly utilized for a specific elevator system 101. This information may be obtained from the database 328A which may be a comprehensive repository. This repository may store lists of configurations obtained from existing field units. It is to be appreciated that such parameters may be tweaked based on the location, age and usage patterns of the elevator car 103 of the system 101 as nonlimiting examples.

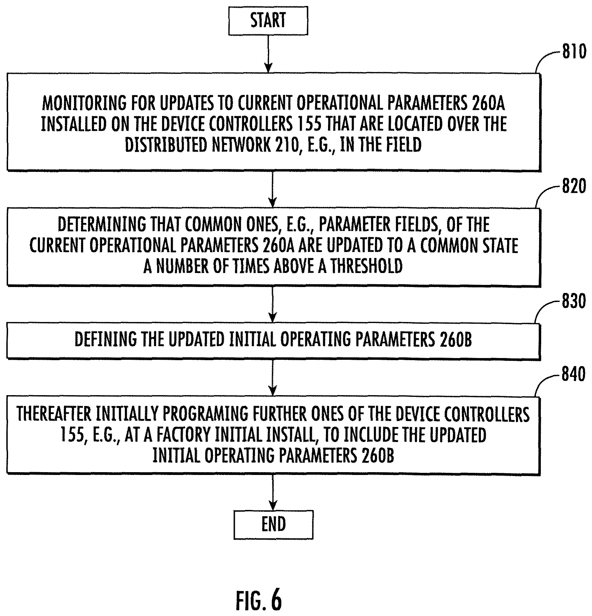

With the disclosed embodiments, elevator controllers 103 initially, from the factory 390, will be configured with generic parameters 400 for the system 101, e.g., related to the elevator car type, and the parameters 260A or code 260 will be updated, e.g., finetuned, to provide greater efficiency, e.g., relative to the specific location. In one embodiment, discussed in greater detail below with the discussion of at least FIG. 6, the initial parameters, e.g., installed at a factory, are updated to define updated initial parameters 260B. The elevator system 101will be configured for efficient operation, such as being configured for energy regeneration and control of car subsystems 103, including car internal lights, fans, breaks, occupancy sensors, a car control panel, etc. Technicians 295 may be automatically informed of updates, i.e., with messages sent to their mobile phones 298 to identify alert conditions or the like. The cloud system 200 may more efficiently track any changes that occur with the system 101, e.g., to one car 103, and should be applied to multiple cars 103 or systems 101. The cloud system 200 may be utilized to develop an effective feedback loop for sending the updated parameters 260A, i.e., which may be in the code 260, to factories 390 for inclusion as the default configuration parameters. The cloud system 200 may also update the parameters based on observed alarms and alerts, e.g. provided to the cloud system 200 via the telemetry data 250, for fine tuning the parameters 260A. That is, as can be appreciated, based on controller specifications identified at an initial order from a factory 390, the optimum parameters 260A, as compared with the initial, untuned default parameters 400, may be uploaded to the controller 150 for the elevator system 101.

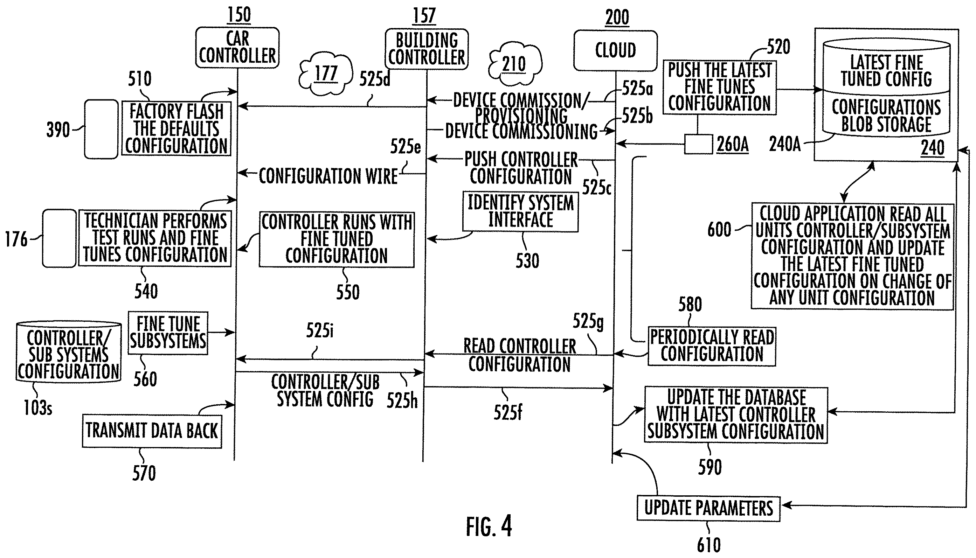

Turning to FIG. 4, a process map shows steps for updating the parameters 260A of the controller 150. The steps include a first step 510 in which the controller 150 is flashed with factory default parameters 400 at the factory 390. A second step 520 is commissioning an elevator system 101 and/or specific car 103 in the building 176 with the controller 150 via communications between the building controller 157 and the cloud system 200. This may include updating the controller 150 with parameters most often applied to the elevator system 101, e.g., as determined by the analytics module 328. The code 260 may be taken from the database 240A in the IoT apps module 240. Due to communications by the controller 150, e.g., transmitting the telemetry data 250, the cloud system 200 is configured to perform a third step 530 of identifying the interface protocols for communicating with the controller 150.

The second and third steps 520, 530 include communications 525a-525c, e.g., over the network 210, between the cloud system 200 and the building controller 157. These communications may be utilized to commission the controller 150 and push the most recent set of parameters 260A to the controller 150, via the building controller 157. Communications between the building controller 157 and the car controller 150 that complete the commissioning, and the protocol updates, include communications 525d-525e, e.g., over the local network 177 between the building controller 157 and the elevator car controller 150.

At a fourth step 540, a finetuning process may be by the technician 295, to fine tune the parameters 260A of the car controller 150. At a fifth step 550, the controller 150 runs the elevator system 101 with the finetuned parameters 260A. At a sixth step 560, the same finetuning process may be run for subsystems 103 of the elevator system 101, such as the doors, lights, breaks, etc. At a seventh step 570 data for the parameters 260A is sent back to the cloud system 200 for storage in the database 240A, e.g., on the IoT Apps module 240.

At an eighth step 580 the cloud system 200 will periodically read the configuration of the controller 150, e.g., using the telemetry data 250. At a ninth step 590 the cloud system 200 will periodically read the configuration of the subsystems 103s. At a tenth step 600, the cloud system 200, e.g., via the analytics module 328, will periodically run the analytics process 328D to determine whether the typical parameters 260A have changed based on updates from the finetuning process (the fourth step) 540 or updated parameters are utilized more frequently than previous parameters. At an eleventh step 610, the cloud system 200 may transmit to the controller 150, or other car controllers in the building 176A, via the building controller 157, over the communication channels 210, 177, the updated parameters 260A that may not have yet been uploaded to the controller 150.

The fourth through eleventh steps 540 to 610 include communications 525f, g, e.g., over the network 210, between the cloud system 200 and the building controller 157. These communications transmit updated parameters 260A to the cloud system 200 for storage in the IoT apps module 240, processing by the analytics module 328 and transmission back to the car controller 150 of updated parameters 260A. Communications between the building controller 157 and the car controller 150 that complete the transmission of the protocol updates in either direction include communications 525h-525i, e.g., over the local network 177 between the building controller 157 and the elevator car controller 150.

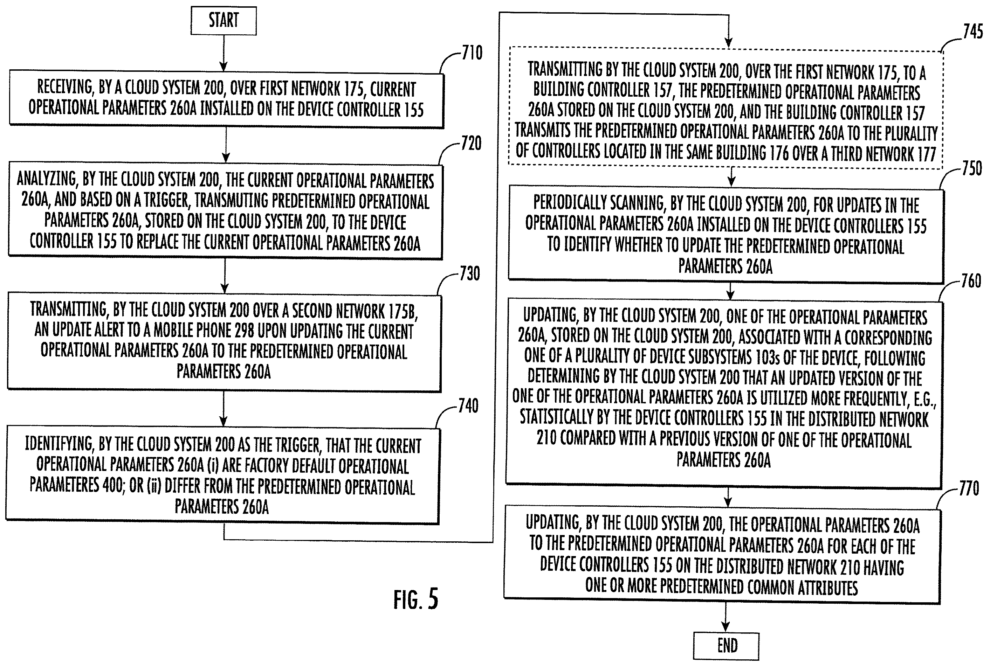

Turning to FIG. 5, a flowchart shows a method of updating operational parameters 260A of a device controller 150 located on a distributed network 210. Boxes in dashed lines in the flowchart represent further explanations of one or more preceding steps and are not intended on limiting the scope of the embodiments.

As shown in block 710, the method includes receiving, by a cloud system 200, over first network 175, current operational parameters 260A installed on the device controller 150. As shown in block 720, the method includes analyzing, by the cloud system 200, the current operational parameters 260A, and based on a trigger, transmuting predetermined operational parameters 260A, stored on the cloud system 200, to the device controller 150 to replace the current operational parameters 260A.

As shown in block 730, the method includes transmitting, by the cloud system 200 over a second network 175B, an update alert to a mobile phone 298 upon updating the current operational parameters 260A to the predetermined operational parameters 260A. As shown in block 740, the method includes identifying, by the cloud system 200 as the trigger, that the current operational parameters 260A (i) are factory default operational parameters 400, or (ii) differ from the predetermined operational parameters 260A.

As shown in block 745, the method includes transmitting by the cloud system 200, over the first network 175, to a building controller 157, the predetermined operational parameters 260A stored on the cloud system 200, and the building controller 157 transmits the predetermined operational parameters 260A to the plurality of controllers located in the same building 176 over a third network 177. As indicated, the first network 175A is a wide area network, the second network is a cellular network 175B, and the third network 177 is a CAN network or a local area network.

As indicated the system includes a plurality of the device controllers 150 distributed over the distributed network 210. As shown in block 750 the method includes periodically scanning, by the cloud system 200, for updates in the operational parameters 260A installed on the device controllers 150 to identify whether to update the predetermined operational parameters 260A.

As shown in block 760, the method includes updating, by the cloud system 200, one of the operational parameters 260A, stored on the cloud system 200, associated with a corresponding one of a plurality of device subsystems 103s of the device, following determining by the cloud system 200 that an updated version of the one of the operational parameters 260A is utilized more frequently, e.g., statistically, by the device controllers 150 in the distributed network 210 compared with a previous version of one of the operational parameters 260A.

As indicated above, the devices 103 are one of elevator cars, escalators, or moving walkways. More specifically, as indicated above, the devices 103 are elevator cars, and the subsystems 103s include one or more of internal lights, fans, breaks, occupancy sensors, or a car control panel of the elevator car 103.

Upon updating the predetermined operational parameters 260A stored on the cloud system 200, as shown in block 770, the method includes updating, by the cloud system 200, the operational parameters 260A to the predetermined operational parameters 260A for each of the device controllers 150 on the distributed network 210 having one or more predetermined common attributes.

The above embodiment shown in FIG. 5 illustrates updating operating parameters 260A of device controllers 155 in the field. Turning to FIG. 6, in one embodiment, the system 200 is configured for defining updated operating parameters 260B, for an initial factory installation on the device controllers 155. As shown in block 810, the method includes the system 200, e.g. via the controller module 220 or other controller that communicates with the controller module 220, monitoring for updates to current operational parameters 260A installed on the device controllers 155 that are located over the distributed network 210, e.g., in the field. The device controllers 155 in the field are being utilized to control devices 103 in the field. As shown in block 820, the method includes the system 200 determining that common ones, e.g., parameter fields, of the current operational parameters 260A are updated to a common state a number of times above a threshold. For example, a parameter field related to the initial lighting controls (as a nonlimiting example) may be updated among all elevator cars 103 in an elevator system 101. As shown in block 830 the method includes system 200 defining the updated initial operating parameters 260B. The updated initial operating parameters 260B include operational parameters in a state that matches the ones of the current operational parameters that were updated to the common state the number of times above the threshold. For example, the initial operational parameters 260B will reflect the updated lighting control configuration that had been updated among all elevator cards 103 in the elevator system 101 in the field. As shown in block 840 the method includes the system 200 thereafter initially programing further ones of the device controllers 155, e.g., at a factory initial install, to include the updated initial operating parameters 260B.

As indicted above, the one or more common attributes includes one or more of devices 103 located in a same building 176, or within a same geographic region, or having one or more of the device subsystems 103s that are the same as each other.

Regarding the implementation of artificial intelligence (AI) identified herein, expressly or inherently, a machine learning model, e.g., part of an artificial intelligence (AI) system, may be utilized in the embodiments. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, a voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects of the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allows microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud system or other processor. The data may be parsed at any one of the processors, partially or completely processed or compiled, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A system configured for updating operational parameters of a device controller located on a distributed network, comprising:
a cloud system that is configured to receive, over a first network, current operational parameters installed on the device controller,
wherein the cloud system is configured to analyze the current operational parameters, and based on a trigger, transmit predetermined operational parameters, stored on the cloud system, to the device controller to replace the current operational parameters; and
the cloud system is configured to transmit an alert to a mobile device over a second network upon updating the current operational parameters to the predetermined operational parameters.

2. The system of claim 1, wherein
the trigger includes the cloud system identifying that the current operational parameters: (i) are factory default operational parameters; or (ii) differ from the predetermined operational parameters.

3. The system of claim 1 or 2, wherein:
the system includes a plurality of the device controllers distributed over the distributed network; and
the cloud system is configured to periodically scan for updates in the operational parameters installed on the device controllers to identify whether to update the predetermined operational parameters.

4. The system of claim 3, wherein
devices controlled by the device controllers are one of elevator cars; escalators; or moving walkways.

5. The system of claim 4, wherein:
the devices are elevator cars; and
the devices include device subsystems, which include one or more of internal lights; fans; breaks; occupancy sensors; or a car control panel.

6. The system of any of claims 3 to 5, wherein
the cloud system is configured to update one of the operational parameters, stored on the cloud system, associated with a corresponding one of a plurality of device subsystems of the device, following determining by the cloud system that an updated version of the one of the operational parameters is utilized more frequently by the device controllers in the distributed network compared with a previous version of one of the operational parameters.

7. The system of claim 6, wherein
upon updating the predetermined operational parameters stored on the cloud system, the cloud system is configured to update the operational parameters to the predetermined operational parameters for each of the device controllers on the distributed network having one or more predetermined common attributes.

8. The system of claim 7, wherein
the one or more predetermined common attributes includes one or more of devices located in a same building, or within a same geographic region, or having one or more of the device subsystems that are the same as each other.

9. The system of any of claims 6 to 8, wherein
the cloud system is configured to transmit, over the first network, to a building controller, the predetermined operational parameters stored on the cloud system, and the building controller is configured to transmit the predetermined operational parameters to the plurality of the controllers located in the same building over a third network.

10. The system of claim 9, wherein the first network is a wide area network, the second network is a cellular network, and the third network is a CAN network or a local area network.

11. A system configured for defining and implementing updated initial operational parameters of device controllers, the system comprising:
a controller that is configured to:
monitor for updates to current operational parameters installed on the device controllers that are located over a distributed network,
determine that common ones of the current operational parameters are updated to a common state a number of times above a threshold, and thereafter define the updated initial operating parameters,
wherein the updated initial operating parameters include operational parameters in a state that matches the ones of the current operational parameters that were updated to the common state the number of times above the threshold, and
thereafter initially program further device controllers to include the updated initial operating parameters.

12. A method for updating operational parameters of a device controller located on a distributed network, comprising:
receiving, by a cloud system, over first network, current operational parameters installed on the device controller;
analyzing, by the cloud system, the current operational parameters, and based on a trigger, transmuting predetermined operational parameters, stored on the cloud system, to the device controller to replace the current operational parameters; and
transmitting, by the cloud system over a second network, an update alert to a mobile phone upon updating the current operational parameters to the predetermined operational parameters.

13. The method of claim 12, comprising
identifying, by the cloud system as the trigger, that the current operational parameters (i) are factory default operational parameters; or (ii) differ from the predetermined operational parameters; and/or
wherein:
the cloud system includes a plurality of the device controllers distributed over the distributed network; and
the method comprises periodically scanning, by the cloud system, for updates in the operational parameters installed on the device controllers to identify whether to update the predetermined operational parameters;
wherein particularly devices controlled by the device controllers are one of elevator cars; escalators; or moving walkways;
wherein particularly:
the devices are elevator cars; and
the devices include device subsystems, which include one or more of internal lights; fans; breaks; occupancy sensors; or a car control panel.

14. The method of claim 12 or 13, comprising
updating, by the cloud system, one of the operational parameters, stored on the cloud system, associated with a corresponding one of a plurality of device subsystems of the device, following determining by the cloud system that an updated version of the one of the operational parameters is utilized more frequently by the device controllers in the distributed network compared with a previous version of one of the operational parameters; and/or
wherein upon updating the predetermined operational parameters stored on the cloud system, the method includes updating, by the cloud system, the operational parameters to the predetermined operational parameters for each of the device controllers on the distributed network having one or more predetermined common attributes; and/or
wherein the one or more predetermined common attributes includes one or more of devices located in a same building, or within a same geographic region, or having one or more of the device subsystems that are the same as each other.

15. The method of any of claims 11 to 14, comprising
transmitting by the cloud system, over the first network, to a building controller, the predetermined operational parameters stored on the cloud system, and the building controller transmits the predetermined operational parameters to the plurality of the controllers located in the same building over a third network;
where particularly the first network is a wide area network, the second network is a cellular network, and the third network is a CAN network or a local area network.
